# EUROPEAN PATENT APPLICATION

(11) **EP 2 573 656 A2**
(43) Date of publication of application: **27.03.2013**
(21) Application number: 12167270.3
(22) Date of filing: 09.05.2012
(51) Int. Cl.: G06F 3/0354, G06F 3/038

(54) **Mouse with adjustable resolution function**

(30) Priority: 08.09.2011 TW 100132499
(71) Applicant: Giga-Byte Technology Co., Ltd., New Taipei City 231 (TW)
(72) Inventor: Lin, Yin Yu, 231 Hsin Tien (TW)
(74) Representative: Schwerbrock, Florian

(57) **Abstract**

A mouse with an adjustable resolution function executes the cursor control function normally. The mouse includes an adjustment unit, a processor, and a sensor unit. The adjustment unit optionally generates an adjusting signal and transmits the adjusting signal to the processor. The processor receives the adjusting signal, generates a control signal correspondingly and transmits the control signal to the sensor unit. According to the control signal and the moving path of the mouse, the sensor unit correspondingly generates a displacement signal to the processor and enables the mouse to execute the cursor moving function in accordance with the displacement signal.

## Description

### BACKGROUND OF THE INVENTION

### Field of Invention

The present invention relates to a pointing device and more particularly relates to a mouse with an adjustable resolution function.

### Related Art

The keyboard and the mouse are two principal input devices in the present computer system. Because of the widespread windows interface, and various requirements like playing games, watching videos, browsing over internet, the mouse is more important than the keyboard for the user. Therefore, the function and the structure of the mouse have been developed and improved continuously.

The structure of the mouse is developed gradually from the early mechanical mouse to the current optical mouse, and further to the advanced laser mouse. The connection type between the mouse and the computer is ameliorated from the wire connection to the wireless connection. Furthermore, there are many other additional designs and functions.

With the progress of the computer technique in recent years, the display device is also improved from the CRT display to the LCD display. Accordingly, both the resolution and size of the display increase significantly. The resolution of the mouse is closely related to the resolution of the panel, and affects the performance of the cursor control function of the mouse. Consequently, the required resolution of the mouse is rising along with the progress of the display device.

The resolution of the display panel is expressed by the number of pixels and the resolution of the mouse is expressed by the DPI (dot per inch). So the relationship there between indicates that the cursor will move on the display correspondingly in pixels when the mouse moves a certain distance.

As mentioned above, the resolution of the mouse raises with the increased resolution and size of the display. Therefore, the resolution of the current mainstream mouse, the optical mouse, is higher than the early mechanical mouse, and the advanced laser mouse has highest resolution among them.

However, the resolution of the mouse should vary with the different operating environments for meeting the requirements of users. For example, lower resolution is sufficient as the user needs higher accuracy of the pointing operation such as playing games or plotting; higher resolution is required as the user needs to move the cursor rapidly such as browsing web-pages.

The resolution of the mouse is regulated by executing the control function or the utility program in the operating system; however, it is inconvenient for the user mainly because he/she has to execute a specific software or program whenever necessary. Furthermore, if the user is not satisfied with the resultant performance of the mouse, the regulation has to be performed repetitively. Unfortunately, in many situations, for example on playing games, it is difficult or almost impossible for the user to pause games to modulate the resolution.

### SUMMARY OF THE INVENTION

The present disclosure provides a mouse with an adjustable resolution function to solve the problems of the conventional method of regulating the resolution of the mouse.

The present invention provides the mouse with an adjustable resolution function, and the mouse executes a cursor control function normally. The mouse includes an adjustment unit, a processor and a sensor unit. The adjustment unit optionally generates an adjusting signal then the processor receives the adjusting signal and generates a control signal correspondingly. Further, the sensor unit receives the control signal, detects the moving path of the mouse, generates a displacement signal according to both the control signal and the moving path of the mouse, and transmits the displacement signal to the processor. So the processor executes the cursor control function according to the displacement signal.

The mouse of the present invention further includes a display unit displaying the displacement signal which is received by the processor.

The present invention discloses a method for adjusting the resolution of a mouse including the following steps. First, an adjustment unit generates an adjusting signal optionally. Then the adjusting signal triggers a processor and the processor generates a control signal correspondingly. Finally, the sensor unit generates a displacement signal according to both the control signal and the moving path of the mouse.

The method for adjusting the resolution of a mouse of the present invention further includes the following steps. The sensor unit generates an initial displacement signal and then generates a renewed displacement signal according to both the control signal and the moving path of the mouse; next, the sensor unit replaces the initial displacement signal with the renewed displacement signal.

The present invention provides another one mouse with an adjustable resolution function and the mouse executes a cursor control function normally. The mouse includes an adjustment unit, a processor and a sensor unit. The adjustment unit optionally generates an adjusting signal, and then the sensor unit generates an initial displacement signal according to the moving path of the mouse. The processor receives the adjusting signal and the initial displacement signal then the processor modulates the initial displacement signal according to the adjusting signal and generates a renewed displacement signal. The mouse executes the cursor control function according to the renewed displacement signal.

The method of the present invention for switching the operation modes of the mouse further includes the following steps. The sensor unit generates an initial displacement signal according to the detection rate per unit displacement of the mouse. The mouse executes the cursor control function according to the initial displacement signal. Further, the adjustment unit optionally generates an adjusting signal. Then the processor receives both the adjusting signal and the initial displacement signal, modulates the initial displacement signal according to the adjusting signal and generates a renewed displacement signal. The mouse executes the cursor control function according to the renewed displacement signal.

The mouse of the present invention further includes a display unit displaying the displacement signal which is received by the processor.

The present invention features that the user can regulate the resolution of the mouse by using the adjustment unit according to user's requirement directly without setting by the specific software or program. The present invention is quick, direct and convenient, also avoids some situations that user can not modulate the resolution of the mouse by the specific software or program.

Further objects, embodiments and advantages are apparent in the drawings and in the detailed description which follows.

### BRIEF DESCRIPTION OF THE DRAWINGS

Figure 1 illustrates the mouse of the first embodiment of the present invention.
Figure 2 illustrates the mouse of the second embodiment of the present invention.
Figure 3 illustrates the flow chart of a method of adjusting the mouse of the first embodiment of the present invention.
Figure 4 illustrates the flow chart of another method of adjusting the mouse of the first embodiment of the present invention.
Figure 5 illustrates the flow chart of still another method of adjusting the mouse of the first embodiment of the present invention.
Figure 6 illustrates the flow chart of a method of adjusting the mouse of the second embodiment of the present invention.
Figure 7 illustrates the flow chart of another method of adjusting the mouse of the second embodiment of the present invention.

### DETAIL DESCRIPTION OF THE INVENTION

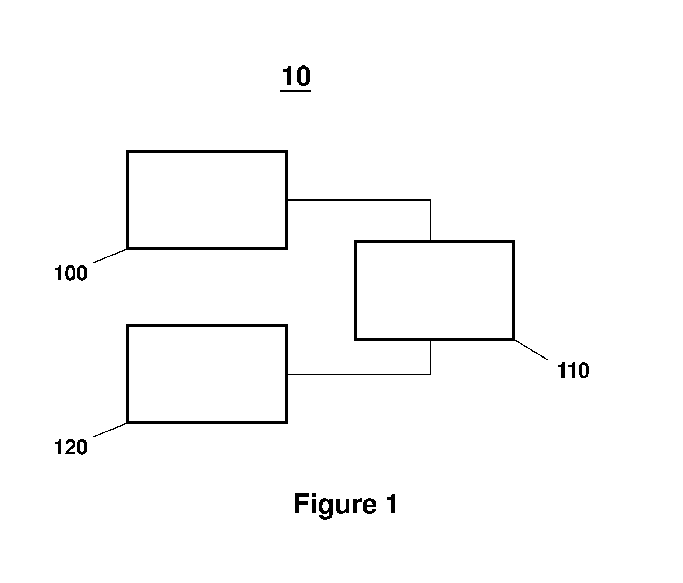

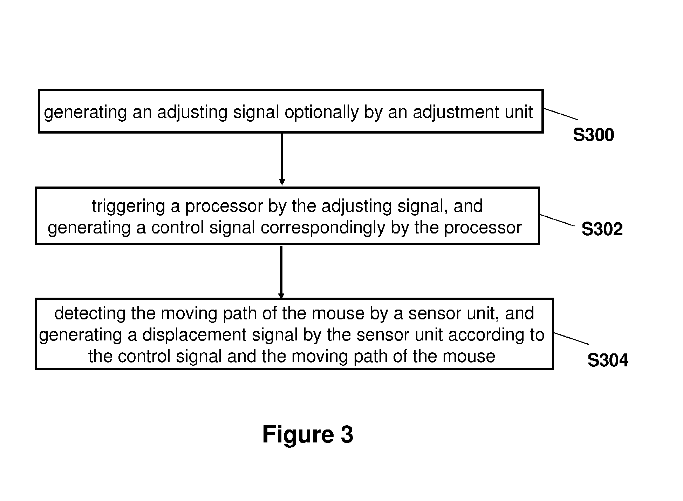

Figure 1 illustrates the mouse 10 according to the first embodiment of the present invention and Figure 3 illustrates the flow chart of a method of adjusting the mouse 10 of the first embodiment of the present invention.

The mouse 10 of the present invention executes a cursor control function normally and the mouse 10 includes an adjustment unit 100, a processor 110 and a sensor unit 120. The processor 110 is electrically connected to the adjustment unit 100 and the sensor unit 120 respectively. The adjustment unit 100 optionally generates an adjusting signal and transmits it to the processor 110. The processor 110 receives the adjusting signal and generates a control signal correspondingly then transmits it to the sensor unit 120. The sensor unit 120 receives the control signal, detects the moving path of the mouse, generates a displacement signal according to both the control signal and the corresponding moving path of the mouse, and transmits the displacement signal to the processor 110. The mouse 10 then executes the cursor control function according to the displacement signal.

The adjustment unit 100 of the present embodiment may be a button or a dial. The type of the adjustment unit 100 can be selected as desired, for example, a touch panel as well. It is to be noted that the adjustment unit 100 is not limited to the above types.

Referring back to Figure 1 and Figure 3, in Step S300, the user manipulates the adjustment unit 100 to generate an adjusting signal optionally and the adjustment unit 100 transmits the adjusting signal to the processor 110. The operation that the user optionally generates the adjusting signal by the adjustment unit 100 can be carried out by pressing the button, dialing, or touching the touch panel.

In Step S302 of Figure 3, the processor 110 is triggered by the adjusting signal to generate a control signal correspondingly and then transmits the control signal to the sensor unit 120. In more detail, the control signal is correspondingly generated by a firmware inside the processor 110.

In Step S304 of Figure 3, the sensor unit 120 detects the moving path of the mouse 10 and generates a displacement signal according to both the control signal and the moving path of the mouse 10.Then, the sensor unit 120 transmits the displacement signal to the processor 110 to enable the mouse 10 to execute the cursor control function according to the displacement signal.

In the step that the sensor unit 120 generates the displacement signal of the present embodiment, the displacement signal may be generated from the adjustment unit 100 directly. For example, the user optionally modulates or controls the displacement signal by operating the adjustment unit 100 directly. In other words, the user determines the displacement signal only based on the control signal that is generated by the adjustment unit 100 correspondingly by, for example, pressing the button or dialing the dial.

Alternatively, in the step that the sensor unit 120 generates the displacement signal of the present embodiment, the displacement signal may be determined by the sensor unit 120 according to the moving path of the mouse 10. For example, when the user operates the adjustment unit 100 to generate the adjusting signal optionally for the processor 110 to generate the control signal correspondingly, the user further moves the mouse 10 for the sensor unit 120 to detect the moving path of the mouse 10. Therefore, the sensor unit 120 generates the displacement signal according to the control signal and the corresponding moving path of the mouse 10. For example, the user may determine the displacement signal based on the length and the direction of the moving path of the mouse 10 after triggering the adjustment unit 100.

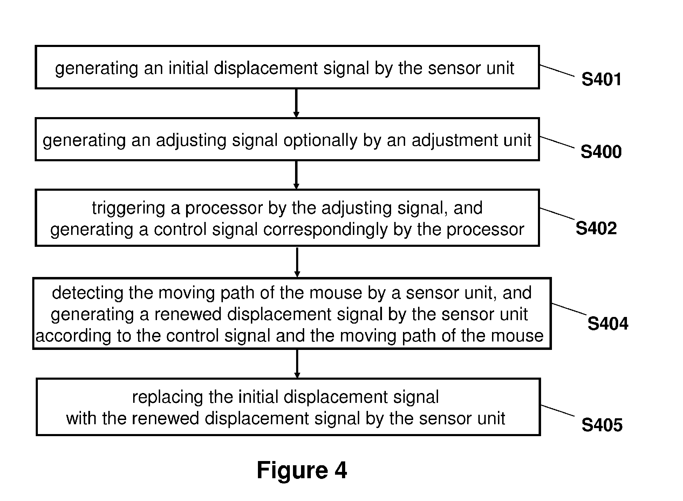

Figure 4 illustrates the flow chart of another method of adjusting the mouse 10 of the first embodiment (Figure 1) of the present invention.

The mouse 10 of the present invention executes a cursor control function normally and the mouse 10 includes an adjustment unit 100, a processor 110 and a sensor unit 120. The processor 110 is electrically connected to the adjustment unit 100 and the sensor unit 120 respectively. The sensor unit 120 detects the moving path of the mouse 10 and generates an initial displacement signal according to the detection rate per unit displacement of the mouse 10. Further, the adjustment unit 100 optionally generates an adjusting signal and transmits it to the processor 110. The processor 110 receives the adjusting signal and generates a control signal correspondingly then transmits it to the sensor unit 120. The sensor unit 120 receives the control signal and generates a renewed displacement signal according to the control signal and the corresponding moving path of the mouse 10. After that, the mouse 10 executes the cursor control function according to the renewed displacement signal.

The adjustment unit 100 of the present embodiment may be a button or a dial. However, the type of the adjustment unit 100 can be selected as desired, for example a touch panel as well. It is to be noted that the adjustment unit 100 is not limited to the above types.

Referring back to Figure 4 together with Figure 1, in Step S401, the sensor unit 120 generates an initial displacement signal according to the detection rate per unit displacement of the mouse 10. Then the mouse 10 executes a cursor control function normally according to the initial displacement signal.

In addition, Step S400 is similar to aforesaid Step S300 and Step S402 is similar to aforesaid Step S302.

In Step S404, the sensor unit 120 generates a renewed displacement signal according to the control signal and the corresponding moving path of the mouse 10.

In the step that the sensor unit 120 generates the renewed displacement signal of the present embodiment, the renewed displacement signal may be generated from the adjustment unit 100 directly. For example, the user optionally modulates or controls the initial displacement signal by operating the adjustment unit 100 directly to generate the renewed displacement signal. In other words, the user determines the renewed displacement signal only based on the control signal that is generated by the adjustment unit 100 correspondingly by, for example, pressing the button or dialing the dial.

Alternatively, in the step that the sensor unit 120 generates the renewed displacement signal of the present embodiment, the renewed displacement signal may also be determined by the sensor unit 120 according to the moving path of the mouse 10. For example, when the user operates the adjustment unit 100 to generate the adjusting signal optionally for the processor 110 to generate the control signal correspondingly, the user further moves the mouse 10 for the sensor unit 120 to detect the moving path of the mouse 10. Therefore, the sensor unit 120 increases, deceases or varies the initial displacement signal according to the corresponding moving path of the mouse 10 to generate the renewed displacement signal. For example, the user may determine the renewed displacement signal based on the length and the direction of the moving path of the mouse 10 after triggering the adjustment unit 100.

In Step S405, the sensor unit 120 replaces the initial displacement signal with the renewed displacement signal and transmits the renewed displacement signal to the processor 110 for the mouse 10 to execute the cursor control function.

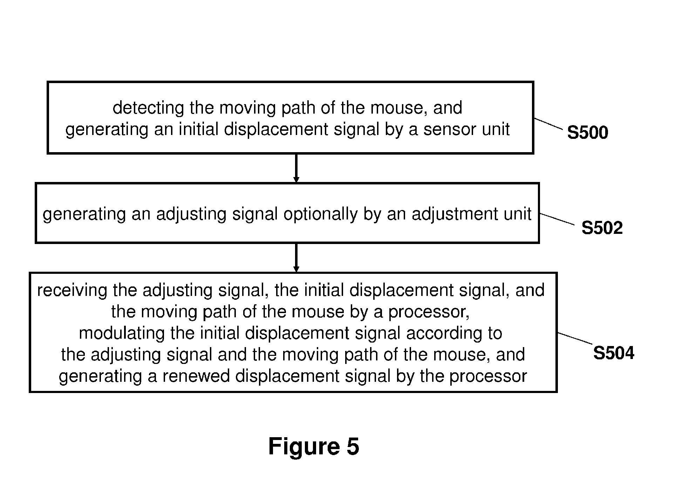

Figure 5 illustrates the flow chart of still another method of adjusting the mouse 10 of the first embodiment (Figure 1) of the present invention.

The mouse 10 of the present invention executes a cursor control function normally and the mouse 10 includes an adjustment unit 100, a processor 110 and a sensor unit 120. The processor 110 is electrically connected to the adjustment unit 100 and the sensor unit 120 respectively. Further, the adjustment unit 100 optionally generates an adjusting signal and transmits it to the processor 110. The sensor unit 120 detects the moving path of the mouse 10 and generates an initial displacement signal according to the moving path of the mouse 10. The processor 110 receives the adjusting signal, the initial displacement signal and the moving path of the mouse 10 and then modulates the initial displacement signal according to the adjusting signal and the corresponding moving path of the mouse 10. Afterwards, the processor 110 generates a renewed displacement signal for the mouse 10 to execute the cursor control function according to the renewed displacement signal.

The adjustment unit 100 of the present embodiment may be a button or a dial. The type of the adjustment unit 100 can be selected as desired, for example, a touch panel as well. It is to be noted that the adjustment unit 100 is not limited to the above types.

In Step S500, the sensor unit 120 detects the moving path of the mouse 10 and generates an initial displacement signal according to the detection rate per unit displacement of the mouse 10. Then the sensor unit 120 transmits moving path of the mouse 10 and the initial displacement signal to the processor 110.

In Step S502, the adjustment unit 100 optionally generates an adjusting signal and transmits it to the processor 110.

In Step S504, the processor 110 receives the adjusting signal, the initial displacement signal and the moving path of the mouse 10 and then modulates the initial displacement signal to generate a renewed displacement signal according to the adjusting signal and the corresponding moving path of the mouse 10. Then the processor 110 generates the renewed displacement signal for the mouse 10 to execute the cursor control function according to the renewed displacement signal.

In the embodiment, the renewed displacement signal is generated correspondingly by a firmware inside the processor 110. Subsequently, the processor 110 converts the initial displacement signal to the renewed displacement signal according to the adjusting signal and the moving path of the mouse 10 by, for example, addition and subtraction or scaling.

In the step that the processor 110 generates the renewed displacement signal of the present embodiment, the renewed displacement signal may be based on the adjusting signal directly. For example, the user optionally modulates or controls the initial displacement signal by operating the adjustment unit 100 directly. In other words, the user determines the renewed displacement signal only based on the adjusting signal that is generated by the adjustment unit 100 correspondingly by, for example, pressing the button or dialing the dial.

Alternatively, in the step that the processor 110 generates the renewed displacement signal of the present embodiment, the renewed displacement signal also may be determined by the processor 110 according to the moving path of the mouse 10. For example, when the user operates the adjustment unit 100 to generate the adjusting signal optionally, the user also moves the mouse 10 for the sensor unit 120 to detect the moving path of the mouse 10. Then the sensor unit 120 transmits the moving path of the mouse 10 and the initial displacement signal to the processor 110. Then, the processor 110 modulates or controls the initial displacement signal according to the control signal, the initial displacement signal and the moving path of the mouse 10. For example, the user determines the renewed displacement signal based on the length and the direction of the moving path of the mouse 10.

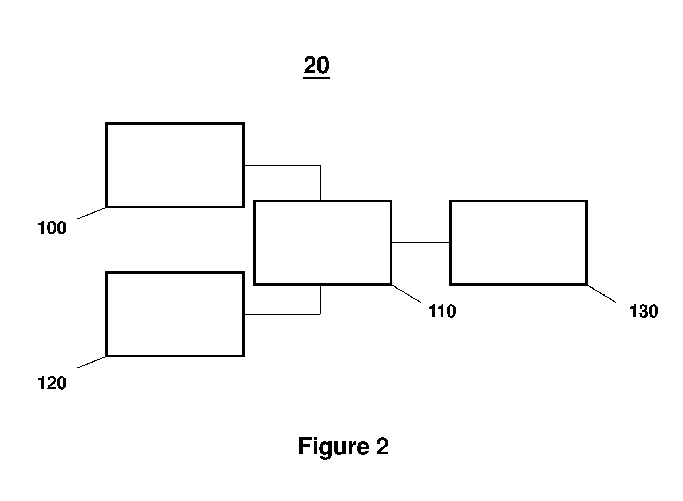

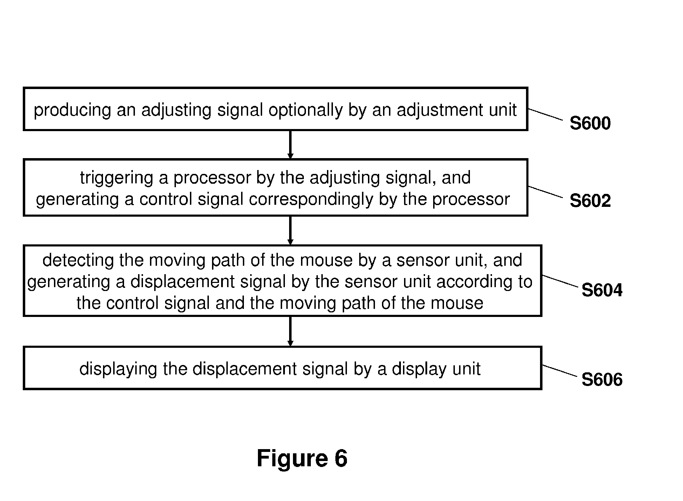

Figure 2 illustrates the mouse 20 of the second embodiment of the present invention, and Figure 6 illustrates the flow chart of a method of adjusting the mouse 20 of the second embodiment (Figure 2) of the present invention.

The mouse 20 of the present invention executes a cursor control function normally and the mouse 20 includes an adjustment unit 100, a processor 110, a sensor unit 120 and a display unit 130. The processor 110 is electrically connected to the adjustment unit 100, the sensor unit 120 and the display unit 130 respectively. The adjustment unit 100 optionally generates an adjusting signal and transmits it to the processor 110. The processor 110 receives the adjusting signal and generates a control signal correspondingly then transmits it to the sensor unit 120. The sensor unit 120 receives the control signal, detects the moving path of the mouse 20, generates a displacement signal according to both the control signal and the corresponding moving path of the mouse 20, and transmits the displacement signal to the processor 110 for the mouse 20 to execute the cursor control function according to the displacement signal. Also, the display unit 130 shows the displacement signal which is received by the processor 110.

The adjustment unit 100 of the present embodiment may be a button or a dial. The type of the adjustment unit 100 can be selected as desired, for example, a touch panel as well. It is to be noted that the adjustment unit 100 is not limited to the above types.

The display unit 130 of the present embodiment may be a liquid crystal display (LCD) or a light-emitting diode (LED) for showing the present value of the displacement signal. It is to be noted that the type of the display unit 130 may be selected as desired and would not be limited to the above types.

In addition, Step S600 is similar to aforesaid Step S300 and Step S400. Also, Step S602 is similar to aforesaid Step S302 and Step S402. Step S602 is similar to aforesaid Step S302 and Step S402. The present embodiment features, differentiating from the former embodiments, Step S606 shows the displacement signal by the display unit 130.

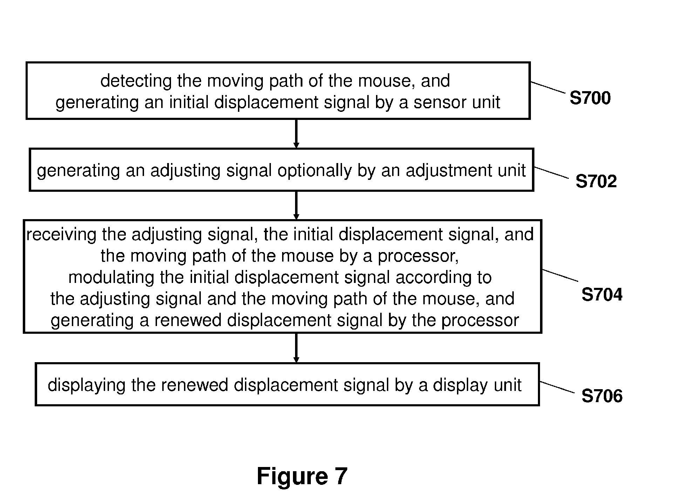

Figure 7 illustrates the flow chart of another method of adjusting the mouse 20 of the second embodiment (Figure 2) of the present invention.

The mouse 20 of the present invention executes a cursor control function normally and the mouse 20 includes an adjustment unit 100, a processor 110, a sensor unit 120 and a display unit 130. The processor 110 is electrically connected to the adjustment unit 100, the sensor unit 120 and the display unit 130 respectively. Further, the adjustment unit 100 optionally generates an adjusting signal and transmits it to the processor 110. The sensor unit 120 detects the moving path of the mouse 20 and generates an initial displacement signal according to the moving path of the mouse 20. The processor 110 receives the adjusting signal and the initial displacement signal then modulates the initial displacement signal according to the adjusting signal. Then the processor 110 generates a renewed displacement signal for the mouse 20 to execute the cursor control function according to the renewed displacement signal. The display unit 130 shows the displacement signal which is received by the processor 110.

The adjustment unit 100 of the present embodiment may be a button or a dial. The type of the adjustment unit 100 can be selected as desired, for example, a touch panel as well. It is to be noted that the adjustment unit 100 is not limited to the above types.

The display unit 130 of the present embodiment may be a liquid crystal display (LCD) or a light-emitting diode (LED) for showing the present value of the displacement signal and the type of the display unit 130 can be selected as desired and would not limited to the above types.

In addition, Step S700 is similar to aforesaid Step S500. Also, Step S702 is similar to aforesaid Step S502. Step S704 is similar to aforesaid Step S504. The present embodiment features, differentiating from the former embodiments, Step S706 shows the displacement signal by the display unit 130.

The above methods for adjusting the resolution of a mouse of the invention are applicable to general mice. It is easier and more convenient for the user to regulate the resolution of the mouse directly via the adjustment unit of the mouse. Furthermore, the current resolution of the mouse is displayed by the display unit. In many situations such as proceeding game, the user is difficult or unable to stop the game to modulate the resolution of the mouse by the traditional method. Therefore, the user can regulate the resolution of the mouse directly by the mouse of the present invention to promote the efficiency and convenience of the operation.

While the disclosure has been described in terms of what is presently consider to be the preferred embodiments, it is to be understood that the disclosure needs not be limited to the disclosed embodiment. On the contrary, it is intended cover various modifications and similar arrangements included within the spirit and scope of the appended claims which are to be accorded with the broadest interpretation so as to encompass all such modification and similar structures. It is therefore intended by the appended claims to define the true scope of the invention.

## Claims

1. A mouse with an adjustable resolution function, the mouse executing a cursor control function normally and **characterized by** comprising:
an adjustment unit (100) optionally generating an adjusting signal;
a processor (110) electrically connected to the adjustment unit (100) and receiving the adjusting signal to generate a control signal correspondingly; and
a sensor unit (120) electrically connected to the processor (110), receiving the control signal, detecting the moving path of the mouse, and generating a displacement signal to the processor (110) according to the control signal and the moving path of the mouse, the mouse executing the cursor control function according to the displacement signal.

2. The mouse of claim 1, wherein the adjustment unit (100) is a button or a dial.

3. The mouse of claim 1, wherein the sensor unit (120) comprises an initial displacement signal, the mouse executes the cursor control function according to the initial displacement signal, the sensor unit (120) generates a renewed displacement signal according to the control signal and the moving path of the mouse, and the sensor unit (120) replaces the initial displacement signal with the renewed displacement signal.

4. The mouse of claim 1, further comprising a display unit (130) electrically connected to the processor (110) and displaying the displacement signal which is received by the processor (110).

5. A method for adjusting resolution of a mouse, the method **characterized by** comprising the following steps of:
generating an adjusting signal optionally by an adjustment unit (100);
triggering a processor (110) by the adjusting signal to generate a control signal correspondingly;
detecting a moving path of the mouse by a sensor unit (120); and
generating a displacement signal by the sensor unit (120) according to the control signal and the moving path of the mouse.

6. The method of claim 5, further comprising the following steps of:
generating an initial displacement signal by the sensor unit (120) according to a detection rate per unit displacement of the mouse before generating the adjusting signal; and
generating a renewed displacement signal according to the control signal and the moving path of the mouse, then replacing the initial displacement signal with the renewed displacement signal by using the sensor unit (120) after generating the control signal.

7. The method of claim 5, wherein the control signal is generated by a firmware stored in the processor (110).

8. A mouse with an adjustable resolution function, the mouse executing the cursor control function normally and **characterized by** comprising:
an adjustment unit (100) optionally generating an adjusting signal;
a sensor unit (120) detecting the moving path of the mouse and generating an initial displacement signal according to the moving path of the mouse; and
a processor (110) electrically connected to the adjustment unit (100) and the processor (110) respectively, configured for receiving the adjusting signal, the initial displacement signal, and the moving path of the mouse, and modulating the initial displacement signal according to the adjusting signal and the moving path of the mouse and generating a renewed displacement signal, the mouse executing the cursor control function according to the renewed displacement signal.

9. The mouse of claim 8, wherein the adjustment unit (100) is a button or a dial.

10. The mouse of claim 8, further comprising a display unit (130) electrically connected to the processor (110) and displaying the renewed displacement signal.

11. A method for adjusting resolution of a mouse, the method **characterized by** comprising the following steps of:
detecting the moving path of the mouse and generating an initial displacement signal by a sensor unit (120) according to a detection rate per unit displacement of the mouse;
generating an adjusting signal optionally by an adjustment unit (100); and
receiving the adjusting signal, the initial displacement signal, and the moving path of the mouse by a processor (110), and modulating the initial displacement signal according to the adjusting signal and the moving path of the mouse to generate a renewed displacement signal.

12. The method of claim 11, wherein the step of modulating the initial displacement signal according to the adjusting signal and the moving path of the mouse is executed by a firmware stored in the processor (110).
